# FASCICULE DE BREVET EUROPEEN

(11) **EP 2 040 031 B1**
(45) Date de publication et mention de la délivrance du brevet: **01.03.2017**
(21) Numéro de dépôt: 08290878.1
(22) Date de dépôt: 16.09.2008
(51) Int. Cl.: G01C 15/04

(54) **Dispositif d'arpentage**
Vermessungsvorrichtung
Surveying device

(30) Priorité: 19.09.2007 FR 0706587
(43) Date de publication de la demande: 25.03.2009
(73) Titulaire: Gissinger, Jean-Edouard, 09900 Thilay (FR); Gissinger, Charles, 08800 Thilay (FR); Thevenin, Patrick, 08150 Remilly les Pothees (FR); Thevenin, Stéphane, 51420 Witry les Reims (FR)
(72) Inventeur: Gissinger, Jean-Edouard, 09900 Thilay (FR); Gissinger, Charles, 08800 Thilay (FR); Thevenin, Patrick, 08150 Remilly les Pothees (FR); Thevenin, Stéphane, 51420 Witry les Reims (FR)
(74) Mandataire: Kaspar, Jean-Georges

(56) Documents cités:
- EP-A2- 1 916 501
- WO-A-93/19447
- JP-A- 2003 004 444
- JP-A- 2003 006 599
- JP-A- 2006 195 873
- US-A- 4 738 060
- US-A- 5 825 298
- DATABASE WPI Week 200416 Thomson Scientific, London, GB; AN 2004-164179 XP002483688 -& KR 2003 067 372 A (JUNG Y B) 14 août 2003 (2003-08-14)

## Description

L'invention est relative à un dispositif d'arpentage apte à être utilisé pour effectuer un marquage sur un sol ou une surface dure ou durcie.

L'invention est particulièrement utile pour effectuer un marquage en ville ou un marquage de travaux publics.

On connaît des repères réalisés simplement à l'aide de clous d'arpentage réalisés en acier durci par traitement thermique apte à pénétrer dans les matériaux de construction du genre béton ou dans les matériaux de revêtement urbain du genre enrobé ou béton bitumineux.

Les repères ainsi réalisés par simple enfoncement de clous d'arpentage servent à effectuer des délimitations ou à localiser des réseaux souterrains ou non visibles de câbles ou de canalisations : ces repères correspondant à des points de coordonnées géométriques permettent aux techniciens de localiser précisément les emplacements d'interventions à effectuer ou de réseaux à protéger, à surveiller ou à entretenir.

Les clous d'arpentage de type connu comportent une tête destinée à rester apparente après enfoncement et un corps terminé par une pointe à enfoncer à demeure dans un sol ou une surface dure. La tête peut être bombée ou plate et comporte un enfoncement conique ou point de centrage adapté à des points ou pieds de mesure d'appareils de géomètres, par exemple de « cannes laser ». Le corps est sensiblement cylindrique et est prolongé par une pointe conique de dureté élevée.

Un marquage approprié est réalisé sur la tête pour désigner la fonction du clou d'arpentage ou son appartenance à un réseau spécifique de points de repère, par exemple un marquage « OGE » ou « ARPENTAGE » pour des travaux de géomètres, ou un marquage « GDF » ou « GAZ DE FRANCE » pour repérer des réseaux ou canalisations de gaz.

En raison de la multiplication des repères utilisés, des améliorations ont été apportées au marquage par adjonction de rondelles colorées portant éventuellement des informations complémentaires, ou par coloration directe des clous d'arpentage, ou de leurs têtes. A cet effet, des couleurs conventionnelles peuvent être choisies pour repérer des réseaux de type connu en milieu urbain, par exemple le bleu pour les canalisations d'eau, ou le rouge pour des câbles électriques.

Cependant, le marquage d'informations sur une tête de clou d'arpentage ou sur une rondelle associée à une tête de clou d'arpentage présente plusieurs inconvénients : d'une part, du fait de la nécessité d'utiliser une taille de caractère permettant la lecture, la quantité d'informations marquées devient insuffisante pour permettre une identification complète des propriétaire, responsable, opérateur, fonction ou autre qualité du repère associé ; d'autre part, du fait de la permanence et de la visibilité du marquage, aucune nouvelle association d'informations ou nouvelle affectation du repère associé au clou d'arpentage n'est possible.

Un premier but de l'invention est de remédier aux inconvénients de la technique connue, en proposant un nouveau dispositif d'arpentage permettant une identification complète du repère associé.

Un deuxième but de l'invention est de permettre une modification ou une nouvelle affectation du repère associé à un nouveau dispositif d'arpentage selon l'invention.

Un troisième but de l'invention est de permettre la traçabilité des opérations associées à un nouveau dispositif d'arpentage selon l'invention.

Les tentatives effectuées pour atteindre ces trois buts se sont révélées infructueuses ou non satisfaisantes pour les raisons suivantes.

Le document JP 2003 004444 décrit une pièce métallique monobloc qui contient un moyen d'identification à distance. Cependant l'effet d'écran et la masse métallique de la pièce monobloc empêchent le fonctionnement effectif du système d'identification à distance.

Le document US 5.825.298 décrit un moyen d'identification à distance inséré dans le centre et sur l'axe d'une pièce non métallique et électriquement isolante.Cette pièce non métallique et électriquement isolante peut être utilisée directement dans les sols mous, mais ne peut pas être mise en place dans les sols durs ou en milieu urbain, sans préparation préalable ou sans percer des avant-trous.

Le document JP 2003 006599 décrit un moyen d'identification à distance inséré dans une chambre et sur l'axe d'une pièce métallique et électriquement conductrice. Cependant l'effet d'écran et la masse métallique de la pièce monobloc empêchent le fonctionnement effectif du système d'identification à distance.

Le document KR 2003 007518 décrit un moyen d'identification à distance inséré dans une chambre et sur l'axe d'une pièce de nature non précisée. Selon la nature métallique ou non métallique de la pièce, ce système présente l'un ou l'autre des inconvénients précités.

Par ailleurs, le document JP 2006 195873 A décrit un dispositif d'arpentage comprenant un pieu métallique enfoncé dans le sol et une borne attachée au pieu métallique et contenant un moyen d'identification à distance de type transpondeur radiofréquence arrangé dans un boîtier cylindrique isolant de telle sorte à éviter l'effet d'écran et de masse métallique produits par la structure du dispositif.

Enfin, le document US-A-4 738 060 décrit un dispositif d'arpentage comprenant une tige en plastique spécial apte à être enfoncé dans le sol et une pièce annulaire en plastique plus souple comprenant un passage à travers lequel la tige est enfoncée pour fixer à demeure la pièce annulaire sur le sol. La pièce annulaire contient un marquage excentré et distant du passage pour une identification visuelle.

Un quatrième but de l'invention est de proposer un nouveau dispositif d'arpentage de remédier aux inconvénients précités de l'art antérieur.

L'invention a pour objet un dispositif d'arpentage, tel que décrit dans la revendication 1, du genre comportant un organe métallique ou électriquement conducteur apte à être enfoncé à demeure dans le sol ou une autre surface dure, et une pièce annulaire non métallique et électriquement isolante apte à être fixée à demeure, après enfoncement dudit organe métallique ou électriquement conducteur dans le sol ou la surface dure, et à travers un passage pour le corps de l'organe métallique ou électriquement conducteur, caractérisé par le fait que la pièce annulaire non métallique et électriquement isolante porte, à un emplacement excentré et distant du passage pour le corps de l'organe métallique ou électriquement conducteur, un moyen d'identification à distance comportant une puce transpondeur.

Selon d'autres caractéristiques alternatives de l'invention :
- L'organe métallique ou électriquement conducteur apte à être enfoncé à demeure dans le sol ou une surface dure est un clou d'arpentage.
- La pièce annulaire non métallique et électriquement isolante comporte un passage pour le corps de l'organe d'ancrage métallique ou électriquement conducteur.
- La pièce annulaire non métallique et électriquement isolante comporte un chambrage pour noyer au moins partiellement la tête de l'organe métallique ou électriquement conducteur.
- La pièce annulaire non métallique et électriquement isolante comporte un contour chanfreiné anti-accrochage.
- La puce transpondeur est du genre RFID.
- La puce transpondeur est du genre apte à être alimentée à distance par un lecteur d'interrogation à distance.
- La pièce annulaire non métallique et électriquement isolante est allongée dans la direction du moyen d'identification à distance, de manière à écarter l'organe d'ancrage métallique ou électriquement conducteur et le moyen d'identification à distance.
- L'écartement de l'organe métallique ou électriquement conducteur et du moyen d'identification à distance est supérieur à une valeur prédéterminée supérieure au diamètre du corps de l'organe d'ancrage métallique ou électriquement conducteur.

L'invention sera mieux comprise grâce à la description qui va suivre donnée à titre d'exemple non limitatif en référence aux dessins annexés dans lesquels :
La figure 1 représente schématiquement une vue en perspective éclatée d'un dispositif d'arpentage selon l'invention.
La figure 2 représente schématiquement une vue en coupe selon la ligne II-II de la figure 1 du dispositif d'arpentage de la figure 1 selon l'invention, assemblé.

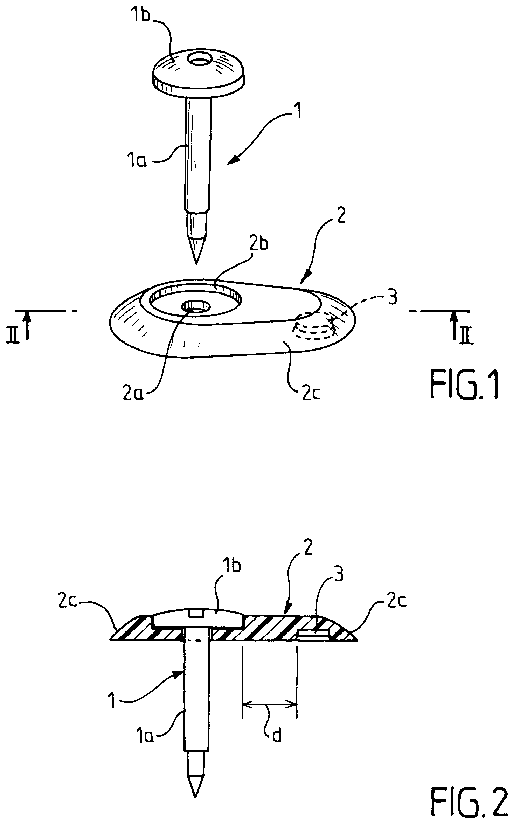

En référence aux figures 1 et 2, les éléments identiques ou fonctionnellement équivalents sont repérés par des chiffres de référence identiques.

Sur la figure 1, un dispositif d'arpentage selon l'invention comporte un organe 1 métallique ou électriquement conducteur, apte à être enfoncé dans le sol ou une surface dure et une pièce annulaire 2 non métallique et électriquement isolante, associée audit organe 1 métallique ou électriquement conducteur.

Dans l'exemple représenté, l'organe 1 métallique ou électriquement conducteur est un clou d'arpentage ; l'invention couvre également tout autre type d'organe 1 mécanique métallique ou électriquement conducteur tel que vis, tirefond, cheville, clou « SPIT » (marque déposée) ou fixation analogue pour murs, parois, cloisons ou éléments en bois ou autres.

La pièce annulaire 2 non métallique et électriquement isolante, associée à l'organe 1 métallique ou électriquement conducteur, comporte avantageusement un passage 2a pour le corps 1a de l'organe 1 métallique ou électriquement conducteur et éventuellement un chambrage 2b formant logement pour noyer au moins en partie la tête 1b de l'organe 1 métallique ou électriquement conducteur.

Le corps 1a de l'organe 1 métallique ou électriquement conducteur présente généralement un diamètre de l'ordre de dix millimètres

La pièce annulaire 2 non métallique et électriquement isolante comporte de préférence un contour chanfreiné 2c évitant l'accrochage d'objets extérieurs sur le dispositif et permettant le roulage de pneumatiques sur le bord du dispositif, sans engendrer de saut ou de discontinuité importante indésirable.

Selon l'invention, la pièce annulaire 2 non métallique et électriquement isolante contient, à un emplacement excentré et distant du passage 2a pour le corps 1a de l'organe 1 métallique ou électriquement conducteur, un moyen 3 d'identification à distance.

Lorsque la pièce annulaire 2 non métallique et électriquement isolante est fabriquée par moulage d'un matériau durcissable, par exemple une matière plastique, une résine, une résine chargée de fibres de verre ou un matériau composite, il est avantageux de noyer, à un emplacement excentré et distant du passage 2a pour le corps 1a de l'organe 1 métallique ou électriquement conducteur, le moyen 3 d'identification à distance dans la pièce annulaire 2 non métallique et électriquement isolante au cours de la fabrication.

Selon l'invention, le moyen 3 d'identification à distance comporte une puce jouant le rôle de transpondeur permettant l'identification, la description du dispositif et de son environnement, et l'initialisation d'un programme de recherche et d'obtention d'informations complémentaires par interrogation à distance de base de données correspondantes.

En implantant une puce transpondeur dans une pièce annulaire 2 non métallique et électriquement isolante, on peut ainsi repérer à distance et identifier un dispositif parmi un ensemble et accéder à toutes les informations opérationnelles de l'environnement des dispositifs, par exemple notamment : coordonnées topographiques, fonctions associées, identification du géomètre ou du responsable de la pose et toutes les informations géographiques relatives au voisinage telles que indication du passage d'un réseau de gaz ou de conduite souterraine à proximité, des limites d'une route ou d'une voie.

On peut également prévoir de charger d'autres informations ou données confidentielles du fabricant ou du géomètre dans la puce transpondeur.

La technologie des puces transpondeurs repose sur l'émission de champs électromagnétiques réceptionnés par une antenne couplée à une puce électronique. Ce champ électromagnétique sert de vecteur à l'information entre la puce et son lecteur d'interrogation à distance, en permettant l'activation de cette puce.

Le système complet d'identification automatique par radiofréquence comporte par conséquent un lecteur qui transmet un signal selon une fréquence prédéterminée vers une ou plusieurs puces transpondeurs situées dans son champ de lecture.

Ces puces transpondeurs transmettent en retour un signal.

Lorsque les puces transpondeurs particulières sont interrogées par le lecteur, un dialogue s'établit selon un protocole de communication prédéterminé pour l'échange des données correspondantes.

La puce transpondeur ou étiquette RFID est ainsi un support d'informations combinant un traitement de signal avec un stockage de données.

L'énergie nécessaire au fonctionnement de la puce transpondeur peut être fournie par une pile ou une batterie électrique interne, ou peut être alimentée à distance par le champ électromagnétique émis par le lecteur d'interrogation à distance.

Dans les deux cas, lorsque le champ électromagnétique balaye l'espace où se trouve la puce transpondeur, cette puce transpondeur détecte le signal et s'active pour transmettre en retour les informations au lecteur d'interrogation à distance.

Ainsi, grâce à l'invention les données peuvent être stockées en nombre plus important et peuvent être rendues confidentielles en prévoyant une autorisation ou une authentification des droits d'interrogation à distance. Les données peuvent également être mises à jour et complétées sans déplacer ou modifier le dispositif selon l'invention.

Sur la figure 2, le dispositif selon l'invention comporte un organe 1 en métal ou matériau susceptible de générer des perturbations électromagnétiques lors de l'interrogation à distance du moyen 3 d'identification.

Pour assurer le bon fonctionnement du moyen 3 d'identification à distance, on prévoit d'allonger la pièce annulaire 2 non métallique et électriquement isolante dans la direction d'inclusion du moyen 3 d'identification à distance et de séparer le moyen 3 d'identification à distance de l'organe 1 métallique ou électriquement conducteur perturbateur, par un écartement d prédéterminé, par exemple par un écartement supérieur à dix millimètres.

On peut également, sans sortir du cadre de la présente invention, constituer un écran annulaire non métallique et électriquement isolant autour du moyen 3 d'identification à distance lors de la fabrication de la pièce annulaire 2 non métallique et électriquement isolante.

L'invention décrite en référence à un mode de réalisation particulier n'y est nullement limitée, mais couvre au contraire toute modification de forme et toute variante de réalisation dans le cadre de l'invention définie par les revendications annexées.

## Revendications

1. Dispositif d'arpentage, du genre comportant un organe (1) métallique ou électriquement conducteur apte à être enfoncé à demeure dans le sol ou une autre surface dure, et une pièce annulaire (2) non métallique et électriquement isolante apte à être fixée à demeure, après enfoncement dudit organe (1) métallique ou électriquement conducteur dans le sol ou la surface dure, et à travers un passage (2a) pour le corps (1a) de l'organe (1) métallique ou électriquement conducteur, **caractérisé par le fait que** la pièce annulaire (2) non métallique et électriquement isolante porte, à un emplacement excentré et distant du passage (2a) pour le corps (1a) de l'organe (1) métallique ou électriquement conducteur, un moyen (3) d'identification à distance comportant une puce transpondeur.

2. Dispositif selon la revendication 1, **caractérisé par le fait que** l'organe (1) métallique ou électriquement conducteur apte à être enfoncé à demeure dans le sol ou une surface dure est un clou (1) d'arpentage.

3. Dispositif selon la revendication 1 ou la revendication 2, **caractérisé par le fait que** la pièce annulaire (2) non métallique et électriquement isolante comporte un chambrage (2b) pour noyer au moins partiellement la tête (1b) de l'organe (1) métallique ou électriquement conducteur.

4. Dispositif selon la revendication 1 ou la revendication 2, **caractérisé par le fait que** la pièce annulaire (2) non métallique et électriquement isolante comporte un contour chanfreiné (2c) anti accrochage.

5. Dispositif selon la revendication 1 ou la revendication 2, **caractérisé par le fait que** la puce transpondeur est du genre RFID.

6. Dispositif selon la revendication 1 ou la revendication 2, **caractérisé par le fait que** la puce transpondeur est du genre apte à être alimentée à distance par un lecteur d'interrogation à distance.

7. Dispositif selon la revendication 1 ou la revendication 2, **caractérisé par le fait que** la pièce annulaire (2) non métallique et électriquement isolante est allongée dans la direction du moyen (3) d'identification à distance, de manière à écarter l'organe (1) métallique ou électriquement conducteur et le moyen (3) d'identification à distance.

8. Dispositif selon la revendication 7, **caractérisé par le fait que** l'écartement de l'organe (1) métallique ou électriquement conducteur et du moyen (3) d'identification à distance est supérieur à une valeur prédéterminée supérieure au diamètre du corps (1a) de l'organe (1) d'ancrage métallique ou électriquement conducteur.

## Patentansprüche

1. Vermessungsvorrichtung der Art, aufweisend ein metallisches oder elektrisch leitendes Organ (1), das imstande ist, auf Dauer im Boden oder einer anderen harten Fläche eingelassen zu sein, und ein nichtmetallisches und elektrisch isolierendes ringförmiges Teil (2), das imstande ist, auf Dauer befestigt zu sein, nach Einlassen des metallischen oder elektrisch leitenden Organs (1) in den Boden oder die harte Fläche, und durch einen Durchgang (2a) für den Körper (1a) des metallischen oder elektrisch leitenden Organs (1), **dadurch gekennzeichnet, dass** das nichtmetallische und elektrisch isolierende ringförmige Teil (2) an einer exzentrierten Stelle und beabstandet vom Durchgang (2a) für den Körper (1a) des metallischen oder elektrisch leitenden Organs (1) ein Fernidentifikationsmittel (3) trägt, das einen Transponderchip aufweist.

2. Vorrichtung nach Anspruch 1, **dadurch gekennzeichnet, dass** das metallische oder elektrisch leitende Organ (1), das imstande ist, auf Dauer in den Boden oder eine harte Fläche eingelassen zu sein, ein Vermessungsnagel (1) ist.

3. Vorrichtung nach Anspruch 1 oder Anspruch 2, **dadurch gekennzeichnet, dass** das nichtmetallische und elektrisch isolierende ringförmige Teil (2) eine Senkkammer (2b) aufweist, um den Kopf (1b) des metallischen oder elektrisch leitenden Organs (1) mindestens teilweise einzulassen.

4. Vorrichtung nach Anspruch 1 oder Anspruch 2, **dadurch gekennzeichnet, dass** das nichtmetallische und elektrisch isolierende ringförmige Teil (2) eine das Verhaken verhindernde abgeschrägte Kontur (2c) aufweist.

5. Vorrichtung nach Anspruch 1 oder Anspruch 2, **dadurch gekennzeichnet, dass** der Transponderchip vom Typ RFID ist.

6. Vorrichtung nach Anspruch 1 oder Anspruch 2, **dadurch gekennzeichnet, dass** der Transponderchip der Art ist, die imstande ist, von einem Fernabfragelesegerät aus der Ferne versorgt zu werden.

7. Vorrichtung nach Anspruch 1 oder Anspruch 2, **dadurch gekennzeichnet, dass** das nichtmetallische und elektrisch isolierende ringförmige Teil (2) in Richtung des Fernidentifikationsmittels (3) gelängt ist, so dass das metallische oder elektrisch leitende Organ (1) und das Fernidentifikationsmittel (3) beabstandet sind.

8. Vorrichtung nach Anspruch 7, **dadurch gekennzeichnet, dass** die Beabstandung des metallischen oder elektrisch leitenden Organs (1) und des Fernidentifikationsmittels (3) über einem vorbestimmten Wert liegt, der größer ist als der Durchmesser des Körpers (1a) des metallischen oder elektrisch leitenden Verankerungsorgans (1).

## Claims

1. A surveying device, of the type comprising a metal or electrically conductive member (1) capable of being permanently pressed in the soil or another hard surface, and a non-metallic and electrically insulating annular part (2) capable of being permanently fixed after pressing said metal or electrically conductive member (1) into the soil or hard surface, and through a passage (2a) for the body (1 a) of the metal or electrically conductive member (1), **characterized in that** the non-metallic and electrically insulating annular part (2) bears, in an off-centered location remote from the passage (2a) for the body (1a) of the metal or electrically conductive member (1), a remote identification means (3) including a transponder chip.

2. The device according to claim 1, **characterized in that** the metal or electrically conductive member (1) capable of being pushed into the soil or a hard surface is a surveying nail (1).

3. The device according to claim 1 or claim 2, **characterized in that** the non-metallic and electrically insulating annular part (2) includes a recess (2b) for at least partially embedding the head (1 b) of the metal or electrically conductive member (1).

4. The device according to claim 1 or claim 2, **characterized in that** the non-metallic and electrically insulating annular part (2) includes an anti-snag beveled contour (2c).

5. The device according to claim 1 or claim 2, **characterized in that** the transponder chip is of the RFID type.

6. The device according to claim 1 or claim 2, **characterized in that** the transponder chip is of the type able to be powered remotely by a remote interrogation reader.

7. The device according to claim 1 or claim 2, **characterized in that** the non-metallic and electrically insulating annular part (2) is elongated toward the remote identification means (3), so as to separate the metal or electrically conductive member (1) and the remote identification means (3).

8. The device according to claim 7, **characterized in that** the separation of the metal or electrically conductive member (1) and the remote identification means (3) is greater than a predetermined value larger than the diameter of the body (1 a) of the metal or electrically conductive anchoring member (1).
